# EUROPEAN PATENT APPLICATION

(11) **EP 2 226 696 A1**
(43) Date of publication of application: **08.09.2010**
(21) Application number: 08854896.1
(22) Date of filing: 25.11.2008
(51) Int. Cl.: G05D 3/00, F03G 7/06, G02B 7/04, G02F 1/1333

(54) **DRIVING MODULE AND ELECTRONIC DEVICE PROVIDED WITH THE SAME**

(30) Priority: 26.11.2007 JP 2007304796
(71) Applicant: Seiko Instruments Inc., Chiba-shi Chiba 261-8507 (JP)
(72) Inventor: KUME, Akira, Chiba-shi Chiba 261-8507 (JP)
(74) Representative: Cloughley, Peter Andrew
(86) International application number: PCT/JP2008/071289
(87) International publication number: WO 2009/069570

(57) **Abstract**

In a driving module and an electronic apparatus provided with the driving module, assembly is simplified and a driving operation can be stabilized. For this purpose, a driving module 1 includes a lens frame 4, a module frame 5, an upper plate spring 6 and a lower plate spring 7 that are stacked and placed on the module frame 5 and the lens frame 4 and provide a biasing force in a predetermined direction to the lens frame 4, an SMA wire 10 that is held by wire holding members 15A, 15B driving the lens frame 4 against the biasing force of the upper plate spring 6 and the lower plate spring 7, a module lower plate 8 stacked and placed on the module frame 5, and a feeding member 9 which is electrically connected to the wire holding members 15A, 15B, has electrodes 9a, 9b with heat capacities equal to each other, and is stacked and placed on the module lower plate 8 while a lower-side fixing pin 14B inserted in the module lower plate 8 is inserted in the feeding member 9. The upper plate spring 6, the lower plate spring 7, and the feeding member are fixed respectively by caulking.

## Description

### Technical Field

The present invention relates to a driving module and an electronic apparatus provided with the same. For example, the present invention relates to a driving module, which is suited for adjusting a focal position by driving an optical system or a mobile member or for being used as an actuator, and relates to an electronic apparatus provided with the driving module.

### Background Art

Conventionally, for example, in small electronic apparatuses such as mobile phones with cameras, in order to drive a body to be driven such as a photographing lens unit, a driving device using the expansion and contraction of a shape memory alloy wire, for example, illustrated in Patent Document 1 has been proposed.

In the driving device illustrated in Patent Document 1, as bodies to be driven, to which a lens is attached, a first mirror frame and a second mirror frame to be a support of the first mirror frame are provided, and those mirror frames are connected to other components such as a spring member through fixing means such as a screw or adhesion, whereby an integrated driving module is formed. Further, a shape memory alloy wire (SMA wire) is placed on the integrated driving module, and a current is allowed to flow through the shape memory alloy wire, whereby Joule heat is generated. Then, the shape memory alloy wire is expanded/contracted by the generated heat to suspend a lens unit against a biasing force of the spring member, thereby moving the lens unit in an axis direction thereof.

Further, the SMA wire is set so that both ends thereof are placed at positions of an upper end of the second mirror frame, which are away from each other, and is stretched on a lower end side with respect to the first mirror frame at a center position in a length direction to be locked at a lower end of the first mirror frame. Then, a flexible printed board is electrically connected to the both ends of the SMA wire, and the flexible printed board is placed so as to be bent along a side surface and a lower surface of the second mirror frame.

Patent Document 1: JP 2007-46561 A

### Disclosure of the Invention

### Problems to be solved by the Invention

Incidentally, in the driving device illustrated in Patent Document 1, the flexible printed board is placed so as to be bent for the purpose of supplying a current to the SMA wire, and hence there is a problem that it takes time and labor for assembly.

A heat capacity of wiring varies due to the difference in a wiring length leading to the both ends of the SMA wire, and radiation properties of heat that is generated in the SMA wire and propagates to the wiring vary between the both ends of the SMA wire. Thus, an asymmetrical temperature distribution occurs on both sides of the locked position of the SMA wire. Therefore, the contracted amount in the length direction varies between one end side and the other end side of the SMA wire, and a body to be driven is operated while being inclined, which makes it impossible to perform stable driving. Further, a phenomenon that a portion of the first mirror frame, to which the SMA wire is locked, rubs against the SMA wire occurs, which degrades the movement resolution of the body to be driven. Further, there is also a fear that the burden on any one of the right and left wires increases to degrade durability.

The present invention has been made to solve the conventional problems, and has an object to provide a driving module that can be assembled easily and stabilize a driving operation, and an electronic apparatus provided with the driving module.

### Means for solving the Problems

In order to achieve the above-mentioned object, in the invention according to claim 1, a driving module includes: a body to be driven in which at least one of both ends has a first fixing pin portion made of a thermoplastic resin; a support which is formed into a tubular shape and contains the body to be driven movably in a predetermined direction, and in which at least one of both tubular ends has a second fixing pin portion made of a thermoplastic resin extending in the predetermined direction; a plate spring member which is stacked and placed on the tubular end of the support and the end of the body to be driven while being inserted in the first fixing pin portion of the body to be driven and the second fixing pin portion of the support from the same direction, and which provides a biasing force in the predetermined direction to the body to be driven; a shape memory alloy wire which is stretched over a tubular outer circumferential portion of the support, and locks the body to be driven at a middle position in a length direction to drive the body to be driven against the biasing force of the plate spring member; a plate member formed of an electric insulator stacked and placed on one tubular end side of the support while the second fixing pin portion is inserted therein; a pair of wire holding members with heat capacities equal to each other, which are placed at a side portion of the support and a side portion of the plate member while grasping ends of the shape memory alloy wire to fix a position thereof, and in which terminal portions for receiving supply of a current extend in a range exceeding a thickness of the side portion of the plate member; and a feeding member which has a pair of electrodes with heat capacities equal to each other, respectively connected electrically to the terminal portions of the respective wire holding members, and which is stacked and placed through the second fixing pin portion inserted in the plate member, in which the plate spring member is fixed to the body to be driven in the first fixing pin portion by caulking a tip end of the first fixing pin portion, and is fixed to the support in the second fixing pin portion by caulking a tip end of the second fixing pin portion, and in which the feeding member is fixed by caulking the tip end of the second fixing pint portion.

According to the invention described above, the body to be driven is housed in the support, and the tip end of the first fixing pin portion and the tip end of the second fixing pin portion are caulked, whereby the plate spring member is fixed. Then, the feeding member is stacked and placed on the plate member stacked and placed on the support, and the tip end of the second fixing pin portion is caulked, whereby the feeding member is fixed on the plate member. The shape memory alloy wire is placed on the side portion of the support while both ends are grasped respectively by the wire holding members, and the terminal portions of the wire holding members are electrically connected to the electrodes of the feeding member, respectively, whereby the terminal portions can receive a current.

A current is supplied to the electrodes of the feeding member to heat the shape memory alloy wire with Joule heat, and to allow the shape memory alloy wire to contract, thereby driving the body to be driven in the predetermined direction.

At this time, the heat capacities of the respective wire holding members and the respective electrodes are equal to each other. Therefore, the heat radiation properties through the wire holding members and the electrodes on both end sides of the shape memory alloy wire become the same properties. Consequently, the temperature distribution of the shape memory alloy wire becomes a symmetrical distribution in the length direction, and hence, the contracted amount of the shape memory alloy becomes the same on both sides of the locked position of the body to be driven.

In the invention according to claim 2, in the driving module according to claim 1, the feeding member includes electrodes formed of a pair of metal plates, which are made of the same material and have the same volume.

According to the invention described above, the feeding member includes the electrodes formed of the pair of metal plate, which are made of the same material and have the same volume. Therefore, electrodes with the same heat capacity can be formed easily depending upon the shape of the support and the arrangement position of the electrodes.

Further, the shape of the electrode can be changed easily, and hence the electric resistance of the feeding member, the terminal position of the electrode, and the like can be changed easily.

In the invention according to claim 3, an electronic apparatus includes the driving module according to claim 1 or 2.

According to the invention described above, due to the presence of the driving module according to claim 1 or 2, the function similar to that of the invention according to claim 1 or 2 is provided.

### Brief Description of the Drawings

[FIG. 1] A schematic perspective view illustrating an attachment state of a driving module according to Embodiment 1 of the present invention with respect to a substrate.
[FIG. 2] An exploded perspective view illustrating a schematic configuration of the driving module according to Embodiment 1 of the present invention.
[FIG. 3] A schematic perspective view illustrating an internal configuration of an assembled state of the driving module according to Embodiment 1 of the present invention.
[FIG. 4] A cross-sectional view taken along the line A-A in FIG. 3.
[FIGS. 5(a) and (b)] A cross-sectional view taken along the line B-B in FIG. 3, and a cross-sectional view taken along the line B-B in FIG. 3 at a time of movement of a body to be driven.
[FIGS. 6(a) and (b)] A perspective view of the body to be driven used in the driving module according to Embodiment 1 of the present invention and a plan view seen from the arrow C.
[FIGS. 7(a) and (b)] A perspective view of a support used in the driving module according to Embodiment 1 of the present invention and a back view seen from the arrow D.
[FIG. 8] A plan view of a plate spring member used in the driving module according to Embodiment 1 of the present invention.
[FIGS. 9(a) and (b)] A plan view of a plate member used in the driving module according to Embodiment 1 of the present invention and a front view thereof.
[FIG. 10] A back view seen from the arrow E in FIG. 9(b).
[FIG. 11] A plan view of a feeding member used in the driving module according to Embodiment 1 of the present invention.
[FIG. 12] A back view of a cover used in the driving module according to Embodiment 1 of the present invention.
[FIGS. 13(a) and (b)] External perspective views of a front surface and a back surface of an electronic apparatus according to Embodiment 2 of the present invention, and a cross-sectional view taken along the line F-F.

### Best Mode for carrying out the Invention

Hereinafter, embodiments of the present invention are described with reference to the attached drawings. In all the figures, the same or corresponding members are denoted with the same reference symbols and the repeated description is omitted, even in the case where embodiments are different.

### [Embodiment 1]

A driving module according to Embodiment 1 of the present invention is described.

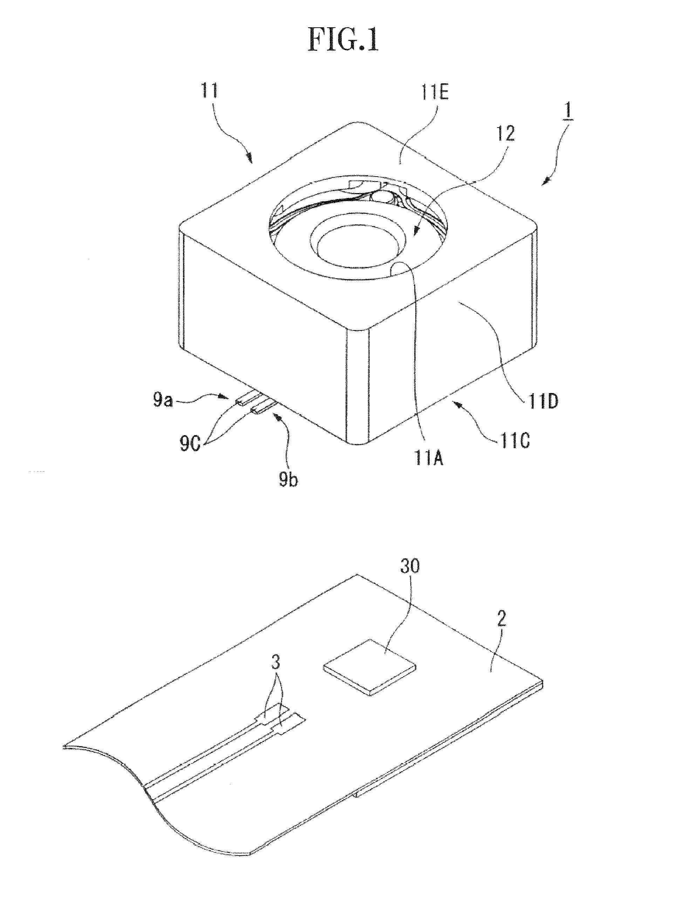

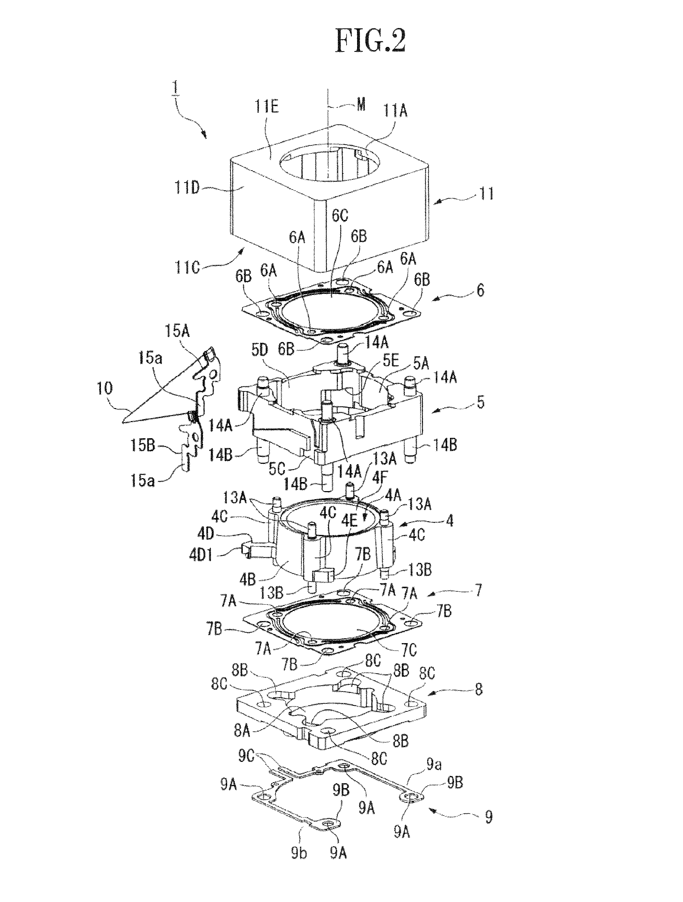

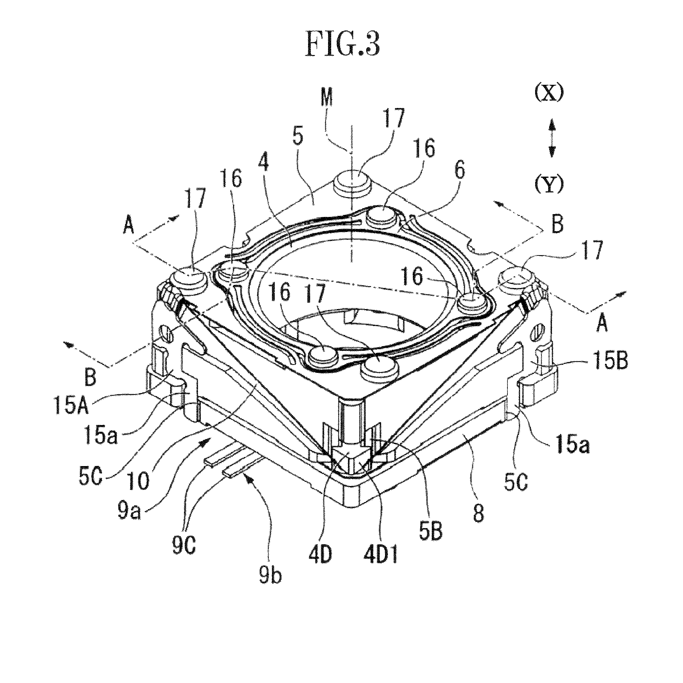

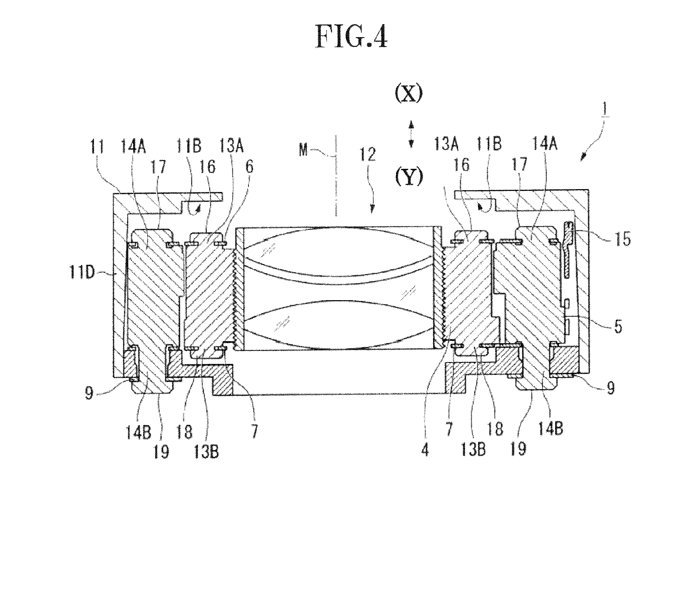

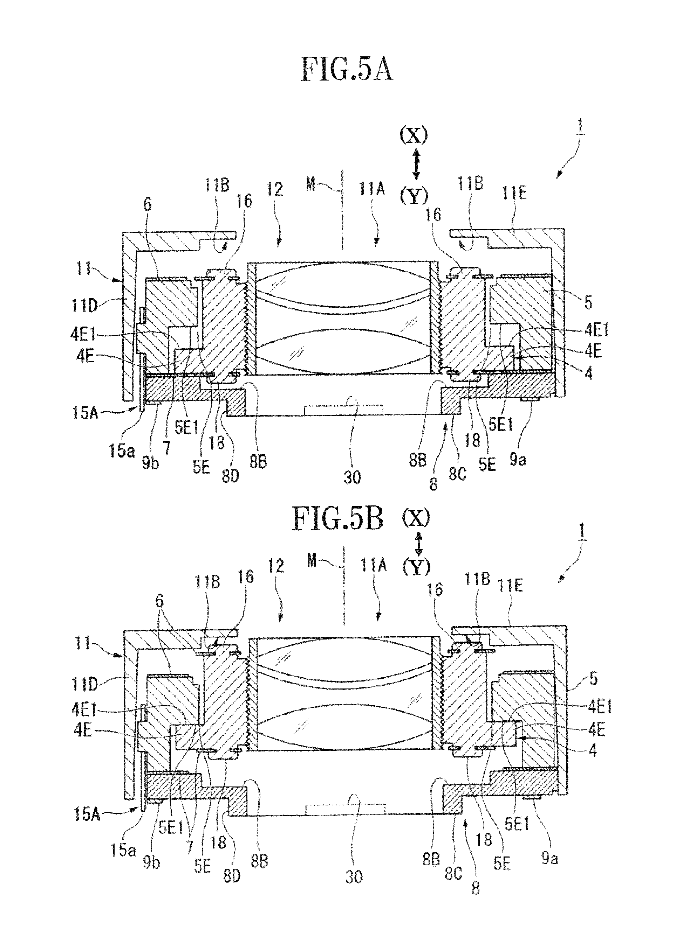

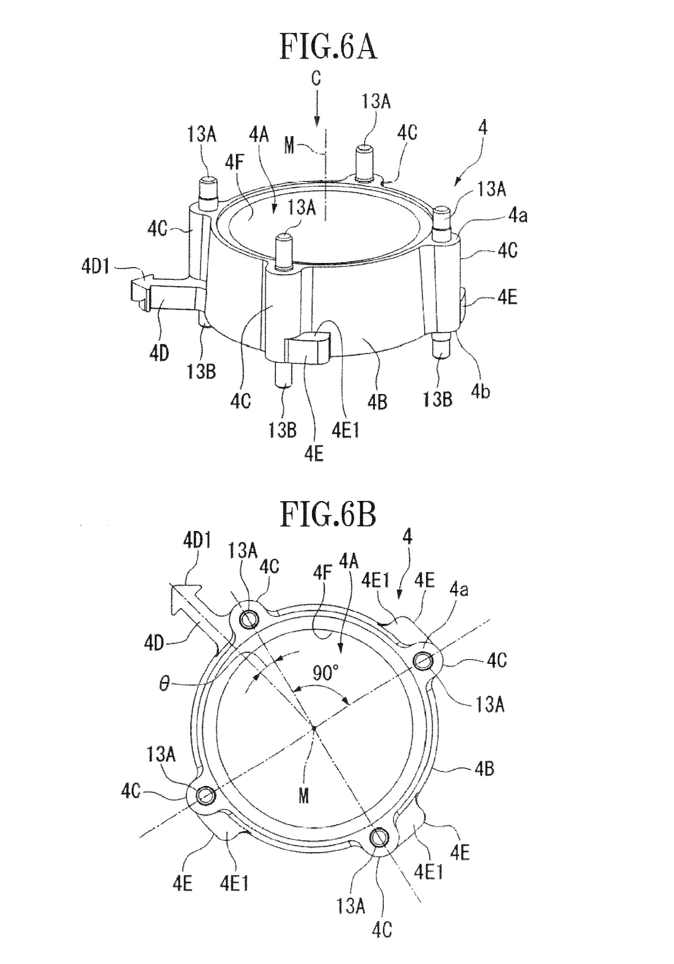

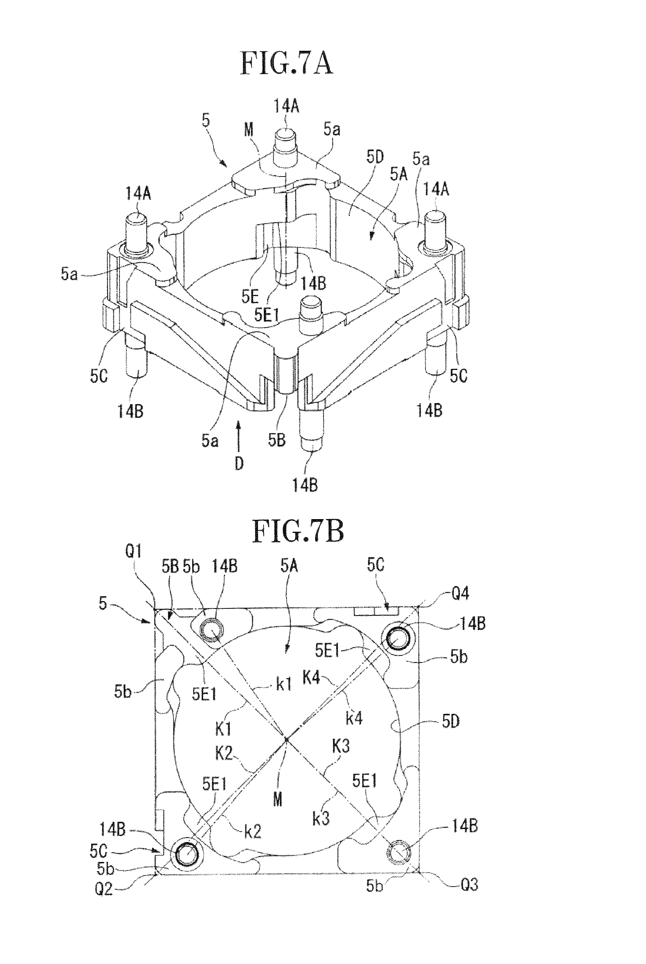

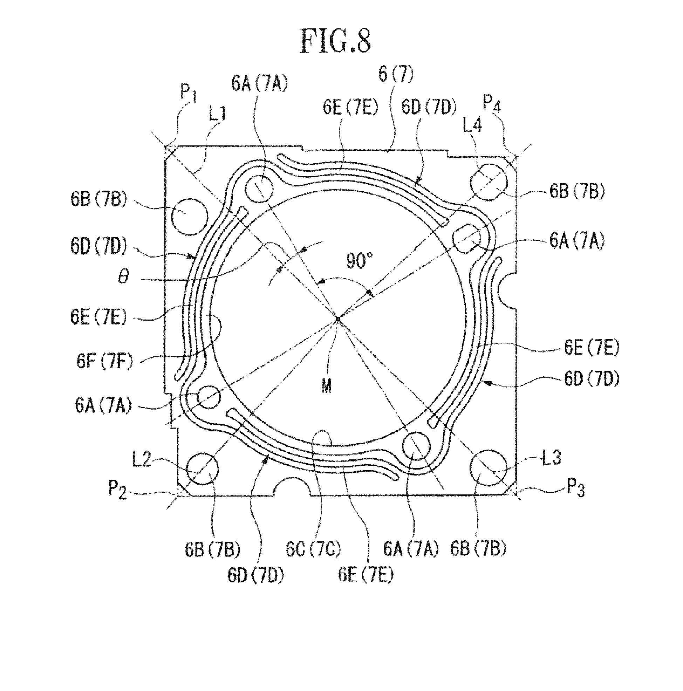

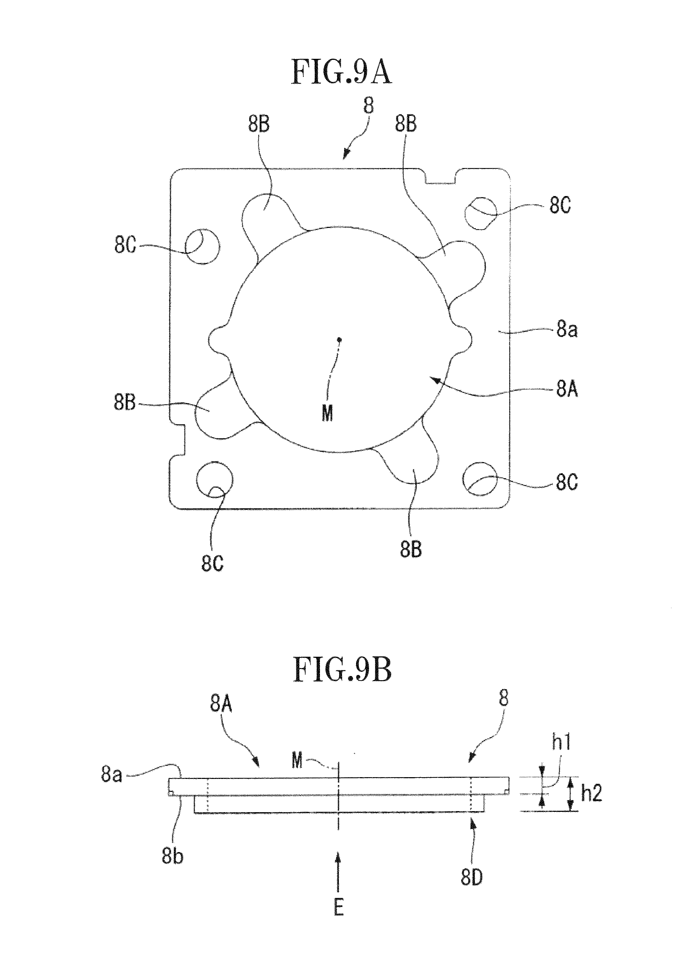

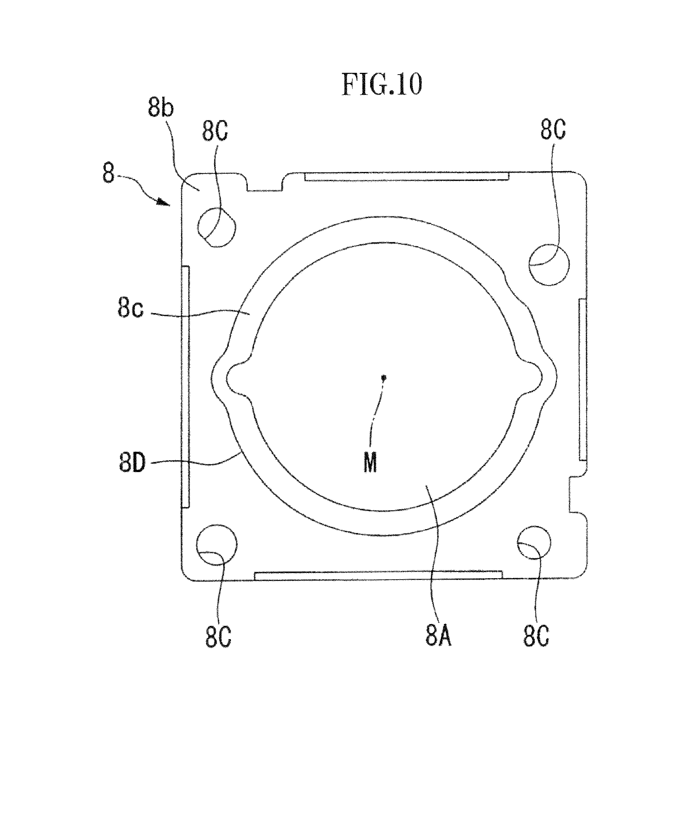

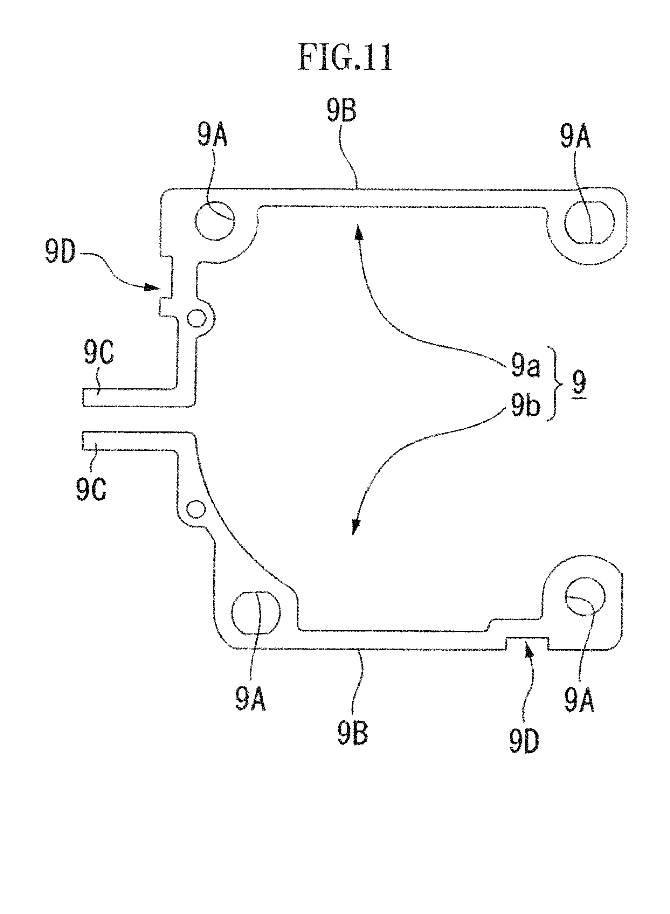

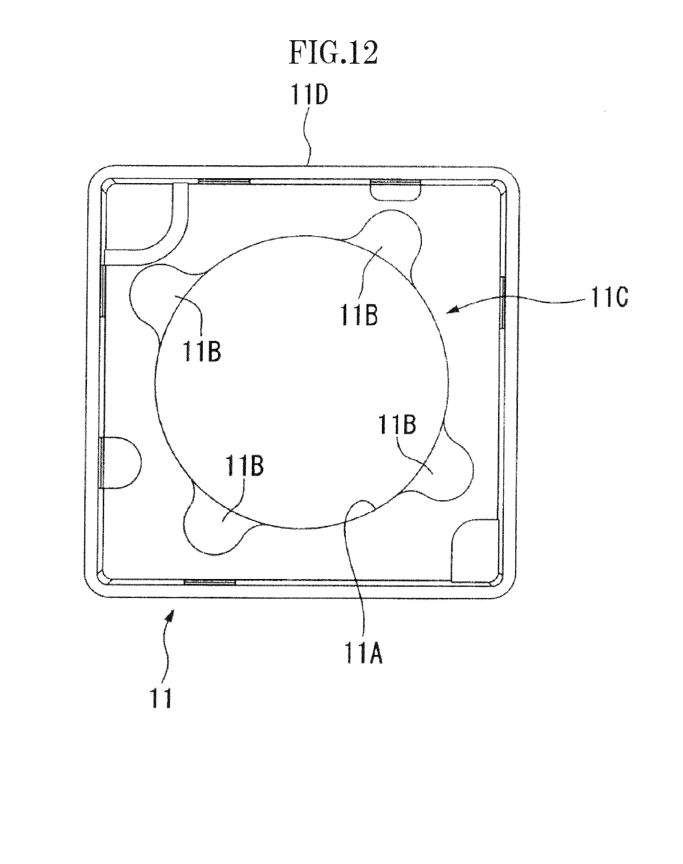

FIG. 1 is a schematic perspective view illustrating an attachment state of a driving module according to Embodiment 1 of the present invention with respect to a substrate. FIG. 2 is an exploded perspective view illustrating a schematic configuration of the driving module according to Embodiment 1 of the present invention. FIG. 3 is a schematic perspective view illustrating an internal configuration of an assembled state of the driving module according to Embodiment 1 of the present invention. FIG. 4 is a cross-sectional view taken along the line A-A in FIG. 3. FIG. 5(a) is a cross-sectional view taken along the line B-B in FIG. 3. FIG. 5(b) is a cross-sectional view taken along the line B-B in FIG. 3 at a time of movement of a body to be driven. FIG. 6(a) is a perspective view of the body to be driven used in the driving module according to Embodiment 1 of the present invention. FIG. 6(b) is a plan view seen from the arrow C in FIG. 6(a). FIG. 7(a) is a perspective view of a support used in the driving module according to Embodiment 1 of the present invention. FIG. 7(b) is a back view seen from the arrow D in FIG. 7(a). FIG. 8 is a plan view of a plate spring member used in the driving module according to Embodiment 1 of the present invention. FIGS. 9(a) and (b) are a plan view of a plate member used in the driving module according to Embodiment 1 of the present invention and a front view thereof, respectively. FIG. 10 is a back view seen from the arrow E in FIG. 9(b). FIG. 11 is a plan view of a feeding member used in the driving module according to Embodiment 1 of the present invention. FIG. 12 is a back view of a cover used in the driving module according to Embodiment 1 of the present invention.

In a part of the drawings, for ease of seeing, components such as the lens unit 12 are omitted appropriately.

The driving module of this embodiment is formed in a box shape as a whole as illustrated in FIG. 1. The driving module 1 in an assembled state is provided in an electronic apparatus or the like and is fitted onto or adhered to a substrate 2 supplying a control signal and power to the driving module 1, whereby the driving module 1 can be fixed.

On an upper surface of the substrate 2, there are provided a pair of land portions 3 connected to a feeding member of the driving module 1 described later so as to supply power and an image pickup element 30.

As illustrated in FIG. 2, the driving module 1 includes, as main components, a lens frame 4 to be a body to be driven, a module frame 5 to be a support, an upper plate spring 6 and a lower plate spring 7 to be plate spring members, a module lower plate 8, a feeding member 9, a shape memory alloy (hereinafter, abbreviated as an SMA) wire 10, and a cover 11, and those components are stacked integrally to constitute one actuator.

In the assembled state of those members, as illustrated in FIGS. 3 and 4, the lens frame 4 is inserted in the module frame 5; the upper plate spring 6 and the lower plate spring 7 are fixed by caulking while sandwiching the lens frame 4 and the module frame 5 in an up-and-down direction in the figure; the module lower plate 8 and the feeding member 9 are stacked in this order from the lower side in the figure and fixed respectively by caulking from a lower side of the module frame 5; and a cover 11 covering those laminates from an upper side is fixed to the module lower plate 8.

A symbol M in the figure denotes a virtual axis of the driving module 1 matched with the optical axis of the lens unit 12, and indicates the driving direction of the lens frame 4. In the following, for simplicity of the description, even in the description of exploded components, the position and direction may be referred to based on the positional relationship with the axis M at a time of assembly. For example, even in the case where a clear circle and cylindrical surface are not present in the components, as long as there is no fear of misunderstanding, the direction along the axis M may be referred to merely as an axial direction, and a radial direction and a circumferential direction of a circle with respect to the axis M may be referred to merely as a radial direction and a circumferential direction.

Further, the up-and-down direction refers to an up-and-down direction in the arrangement in the case where the axis M is placed in a vertical direction and the attachment surface of the driving module 1 is placed on a lower side of the vertical direction, unless otherwise specified.

Among the components, the lens frame 4 to be the body to be driven is formed in a tubular shape as a whole as illustrated in FIG. 2 and 6(a), and a female screw is formed on an inner circumferential surface 4F of a housing portion 4A in a tubular shape, which passes through the center of the lens frame 4 and is formed coaxially with the axis M. Then, the lens unit 12 holding an appropriate lens or lens group on a lens barrel with a male screw formed on an outer circumferential portion (see FIGS. 4 and 5) can be screwed to be fixed to the housing portion 4A.

On an outer wall surface 4B of the lens frame 4, protrusions 4C protruding outward in a radial direction are provided so as to extend in the axial direction at an interval of 90° in a circumferential direction, and in upper ends and lower ends of the respective protrusions 4C, on end surfaces 4a, 4b formed of planes orthogonal to the axis M, four upper-side fixing pins 13A (first fixing pin portions) and lower-side fixing pins 13B (first fixing pin portions), which respectively protrude upward and downward along the axis M are provided, respectively.

The upper-side fixing pins 13A hold the upper plate spring 6, and the lower-side fixing pins 13B hold the lower plate spring 7.

Although the positions of the upper-side fixing pins 13A and the lower-side fixing pins 13B in a planar view may be different from each other, they are placed at coaxial positions parallel to the axis M in this embodiment. Therefore, the upper-side fixing pins 13A and the lower-side fixing pins 13B at the upper plate spring 6 and the lower plate spring 7 have insertion positions in common.

Further, although the respective center positions in the radial direction of the upper-side fixing pins 13A and the lower-side fixing pins 13B may be different, they are placed on the same circumference in this embodiment. Therefore, the respective center positions are placed in a tetragonal lattice shape.

On the outer side in the radial direction of the lens frame 4, a guide protrusion 4D is provided so as to protrude outward in the radial direction from the lower end side of one protrusion 4C. The protruding direction of the guide protrusion 4D is set at a positional relationship shifted by an angle e (where e is an acute angle) from an integral multiple of 90° from the angular position in the circumferential direction of each upper-side fixing pin 13A and each lower-side fixing pin 13B with respect to the axis M. More specifically, when the guide protrusion 4D is placed along a diagonal line of a square, each upper-side fixing pin 13A and each lower-side fixing pin 13B are placed at a position shifted by a predetermined angle e from a diagonal line of a square.

As illustrated in FIG. 3, the guide protrusions 4D locks the SMA wire 10 to a tip end key portion 4D1 thereof, and the guide protrusion 4D is lifted upward (direction indicated by the arrow (X)) to be moved due to the contraction of the SMA wire 10.

Further, as illustrated in FIGS. 2, 6(a), and 6(b), positioning portions 4E in protrusion shapes are provided so as to extend in a circumferential direction from a side portion of each protrusion 4C along a lower portion of the outer wall surface 4B of the lens frame 4.

Each of the positioning portions 4E has a smooth positioning surface 4E1 on an upper surface thereof, and the position in the axial direction of the positioning surface 4E1 is set at a position where positioning portion 4E abuts against a positioning reception portion 5E of the module frame 5 described later (see FIG. 5(b)) when the lens frame 4 tries to move along the axis M upward (direction indicated by the arrow (X)) by a distance equal to or longer than a predetermined distance.

Further, in this embodiment, the lens frame 4 is molded integrally with a thermoplastic resin capable of being caulked with heat or ultrasonic wave, such as a polycarbonate (PC) or a liquid crystal polymer (LCP) resin.

As illustrated in FIGS. 2, 7(a), and 7(b), the module frame 5 is a tubular member whose outer shape in a planar view is formed in a substantially rectangular shape as a whole, and in which a housing portion 5A formed of a through-hole is formed coaxially with the axis M in the center portion thereof. The lens frame 4 is housed in the housing portion 5A.

At upper and lower four corners of the module frame 5, there are formed end surfaces 5a, 5b formed of planes orthogonal to the axis M. Four upper-side fixing pins 14A (second fixing pin portions) are provided upward from the end surfaces 5a, and four lower-side fixing pins 14B (second fixing pin portions) are provided downward from the end surfaces 5b.

The upper-side fixing pins 14A hold the upper plate spring 6, and the lower-side fixing pins 14B hold the lower plate spring 7, the module lower plate 8, and the feeding member.

The distance between the end surfaces 5a, 5b is set to the same distance as that between the end surfaces 4a, 4b of the lens frame 4.

In a lower portion at one corner of the module frame 5, there is formed a cut-away portion 5B whose groove width in a planar view has a size that is fitted with the guide protrusion 4D of the lens frame 4 so as to move in the axial direction. The cut-away portion 5B allows the guide protrusion 4D of the lens frame 4 to pass through while the lens frame 4 is inserted to be housed in the module frame 5 from a lower side, allows the tip end key portion 4D1 of the guide protrusion 4D to protrude outward in the radial direction of the module frame 5, and determines the position of the lens frame 4 in the circumferential direction.

In this embodiment, the cut-away portion 5B is provided at such a position, and hence, as illustrated in FIG. 7(b), the lower-side fixing pin 14B in the vicinity of the cut-away portion 5B is formed at a position away from a line connecting the axis M to an intersection of the corners of the outer shape avoiding the cut-away portion 5B. More specifically, the lower-side fixing pin 14B is provided adjacent to the cut-away portion 5B in the circumferential direction.

In contrast, the other three lower-side fixing pins 14B are respectively provided on a line connecting the axis M to the intersection of the corners of the outer shape, and are placed forming an L-shape along the outer shape of the module frame 5. Thus, four lower-side fixing pins 14B are placed at positions asymmetrical to each other in a planar view.

Meanwhile, although the positions of the upper-side fixing pins 14A and the lower-side fixing pins 14B in a planar view may be different from each other, they are placed at coaxial positions parallel to the axis M in this embodiment, respectively. Therefore, the upper-side fixing pins 14A and the lower-side fixing pins 14B at the upper plate spring 6 and the lower plate spring 7 have insertion positions in common.

As illustrated in FIG. 7(b), assuming that intersections on side surfaces of the module frame 5 are indicated by Q1, Q2, Q3, and Q4 in a planar view, the axis center of each upper-side fixing pin 14A and each lower-side fixing pin 14B are placed respectively in the vicinity of the points Q1, Q2, Q3, and Q4, and on or in the vicinity of line segments K1, K2, K3, and K4 connecting the points Q1, Q2, Q3, Q4 to the axis M. More specifically, the line segments k1, k2, k3, and k4 connecting the axis center of each upper-side fixing pin 14A and each lower-side fixing pin 14B to the axis M overlap the line segments K1, K2, K3, and K4, or cross them at a small angle of about 30° or less.

As illustrated in FIG. 7(a), at two corners adjacent to the cut-away portion 5B of the module frame 5, there is provided a pair of locking grooves 5C for attaching the wire holding members 15A, 15B for holding the SMA wire 10 (see FIGS. 2 and 3) on a side surface on the side in the same direction as that of the corner at which the cut-away portion 5B. In this embodiment, the wire holding member 15A is provided on a side surface on the side from which a pair of terminal portions 9C of the feeding member 9 protrude from the driving module 1, and the wire holding member 15B is provided on a side surface on the side from which a pair of terminal portions 9C of the feeding member 9 do not protrude from the driving module 1.

The wire holding members 15A, 15B are conductive members made of a metal plate or the like formed in a key shape, obtained by caulking the ends of the SMA wire 10 onto the ends of the wire holding members 15A, 15B, and the wire holding members 15A, 15B are fitted in the locking grooves 5C from the side, thereby holding the ends of the SMA wire 10 while positioning the SMA wire 10.

The wire holding members 15A, 15B are formed of metal plates of the same material with the same thickness, punched into the same shape, for example, made of copper, aluminum, stainless steel, or the like, and have different shapes only in a caulking bending direction. Therefore, the heat capacities of the wire holding members 15A, 15B are the same. The wire holding members 15A, 15B have chip-shaped terminal portions 15a on a side opposite to the caulking position of the SMA wire 10, as illustrated in FIG. 3, and under the attached state with respect to the module frame 5, the terminal portions 15a are allowed to protrude slightly downward from the module lower plate 8 stacked on the lower side of the module frame 5.

Further, the SMA wire 10 whose both ends are held by a pair of wire holding members 15A, 15B is locked from a lower side to the tip end key portion 4D1 of the guide protrusion 4D of the lens frame 4 protruding from the cut-away portion 5B of the module frame, and biases the lens frame 4 upward via the tip end key portion 4D1 due to the tension of the SMA wire.

In the housing portion 5A of the module frame 5, as illustrated in FIGS. 7(a), 7(b), the positioning reception portion 5E that is a concave formed from the inner wall surface 5D to the outer side in the radial direction and extending from the lower end side to the intermediate portion on the upper end side in the axial direction is formed in such a shape as to allow each positioning portion 4E of the lens frame 4 to be inserted from a lower side.

The positioning reception portion 5E has a receiving surface 5E1 capable of allowing the positioning surface 4E1 of the positioning portion 4E to abut against the positioning reception portion on a lower side in the axial direction. Thus, as illustrated in FIG. 5(b), when the lens frame 4 moves upward (direction indicated by an arrow (X)) along the axis M by a predetermined distance, the receiving surface 5E1 of each positioning reception portion 5E abuts against the positioning surface 4E1 of each positioning portion 4E. Therefore, the upward movement of the lens frame 4 is regulated. More specifically, the positioning reception portion 5E constitutes a position regulating portion that regulates the movement range of the lens frame 4, and the positioning portion 4E constitutes a portion whose position is to be regulated, provided so as to abut against the position regulating portion of the module frame 5.

In this embodiment, the position in a planar view where the positioning reception portion 5E is formed is provided at positions crossing the line segments K1, K2, K3, and K4 directed from the center (axis M) of the housing portion 5A to the corners of the rectangular outer shape of the module frame 5, as illustrated in FIG. 7(b).

Due to such a configuration, even when large shock is applied to the driving module from outside, for example, the driving module is dropped, the lens frame 4 cannot move upward in the figure, exceeding the position of the receiving surface 5E1 of the positioning reception portion 5E1.

In this embodiment, such a regulating position is set in such a manner that the lens frame 4 does not bump against the cover 11, and the deformation of the upper plate spring 6 and the lower plate spring 7 is equal or less than, for example, a deformation limit such as an elastic limit.

The positioning reception portions 5E are provided at positions crossing the line segments K1, K2, K3, and K4 directed from the center of the housing portion 5A to the corners of the rectangular outer shape of the module frame 5, and hence a region in a radial direction can be effectively used in the corners of the rectangular outer shape protruding from the housing portion 5A to the outer side in the radial direction in the module frame 5.

Therefore, even if the positioning reception portions 5E are provided on an inner side of the module frame 5, the outer shape of the module frame 5 can be prevented from being increased, which enables miniaturization and reduction in weight.

Further, in this embodiment, the module frame 5 is integrally molded with a thermoplastic resin capable of being caulked with heat or an ultrasonic wave, such as a polycarbonate (PC) or a liquid crystal polymer (LCP) resin in the same way as in the lens frame 4.

On each upper portion and each lower portion of the module frame 5 and the lens frame 4 inserted therein, as illustrated in FIG. 4, the upper plate spring 6 and the lower plate spring 7 are stacked respectively.

In this embodiment, as illustrated in FIG. 8, the upper plate spring 6 and the lower plate spring 7 are plate spring members in a plate shape punched into the same shape, and are formed of, for example, a metal plate having a spring property such as stainless (SUS) steel plate.

As illustrated in FIG. 8, the outer shape in a planar view of the upper spring 6 (lower spring 7) is a substantially rectangular shape similar to that of an end on an upper side (lower side) of the module frame 5, and a circular opening 6C (7C) that is slightly larger than the inner circumferential surface 4F of the lens frame 4 and is coaxial with the axis M is formed at the center, whereby the upper plate spring 6 (lower plate spring 7) is formed in a ring shape as a whole.

At three corners and in the vicinity of one corner of the upper plate spring 6 (lower plate spring 7), four through-holes 6B (7B) in which the upper-side fixing pins 14A (lower-side fixing pins 14B) can be inserted respectively are provided correspondingly to the arrangement positions of the upper-side fixing pins 14A (lower-side fixing pins 14B) formed at the corners and in the vicinity of one corner of the module frame 5. In this embodiment, of the through-holes 6B (7B) in which the upper-side fixing pins 14A (lower-side fixing pins 14B) formed at the corners corresponding to the points Q2, Q4 are inserted in FIG 7(b), one is formed in a standard circular hole and the other is formed in an oval hole, which enables the positioning in a plane orthogonal to the axis M with respect to the module frame 5.

Further, on the upper plate spring 6 (lower plate spring 7), four through-holes 6A (7A) in which the upper-side fixing pins 13A (lower-side fixing pins 13B) can be inserted respectively are provided correspondingly to the arrangement position of the upper-side fixing pins 13A (lower-side fixing pins 13B) formed on the lens frame 4.

More specifically, in this embodiment, each through-hole 6A (7A) is formed at a position shifted by an angle θ from an integral multiple of 90° with respect to a straight line L1 corresponding to the line segment K1 in FIG. 7(b). In this embodiment, by setting the angle θ to be an appropriate value in such an arrangement, the respective arrangement positions of the through-hole 6A (7A) and the through-hole 6B (7B) can be set in such a manner that the difference between the diameter of a circle with respect to the axis M at which the through-hole 6A (7A) is positioned and the diameter of a circle with respect to the axis M at which the through-hole 6B (7B) is positioned becomes smaller than that in the case where the through-hole 6A (7A) and the through-hole 6B (7B) are placed so that the angle θ becomes 0°.

Further, a ring portion 6F (7F) is formed on an outer side in a radial direction of the opening 6C (7C), and four slits 6D (7D) extending in a substantially semi-arc shape in a circumferential direction from positions in the vicinity of the through-holes 6A (7A) opposed to each other in a diagonal direction with the axis M interposed therebetween are formed in a state where they overlap each other in a radial direction by a substantially quadrant arc.

Thus, a plate spring member is formed in which four spring portions 6E (7E) extending in a substantially quadrant arc shape from the rectangular frame on the outer side of the upper plate spring 6 (lower plate spring 7) extend to the vicinity of the through-holes 6A (7A) one by one.

As illustrated in FIG. 2, the module lower plate 8 is used for stacking the lower plate spring 7 by sandwiching the lower plate spring 7 between the module lower plate 8 and the module frame 5 from the lower side while the respective lower-side fixing pins 14B of the module frame 5 are inserted in the through-holes 7B of the lower plate spring 7 and the respective lower-side fixing pins 13B of the lens frame 4 housed in the module frame 5 are inserted in the through-holes 7A of the lower plate spring 7, and fixing the outer frame in a rectangular shape of the lower plate spring 7 to the end surface 5b of the module frame 5 in a pressed state.

As illustrated in FIGS. 9(a) and 10, the module lower plate 8 is a plate member having a rectangular outer shape substantially similar to the outer shape of the module frame 5, and an opening 8A in a substantially circular shape with respect to the axis M is formed through the center portion of the module lower plate 8 in the thickness direction. Then, at a time of assembly, four U-shaped concave portions 8B for avoiding the interference with a caulking portion described later are formed at positions corresponding to the arrangement positions of the respective lower-side fixing pins 13B of the lens frame 4 on the upper surface 8a side to be stacked on the lower plate spring 7.

Further, at the respective corners positioned at a circumferential edge of the module lower plate 8, through-holes 8C allowing the lower-side fixing pins 14B to be inserted therethrough are formed correspondingly to the arrangement positions of the respective lower-side fixing pins 14B of the module frame 5.

Further, as illustrated in FIGS. 9(b) and 10, a wall portion 8D protruding downward along the opening 8A is formed on a lower surface 8b of the module lower plate 8. In this embodiment, the distance between the upper surface 8a and the lower surface 8b is set at h1, and the distance between the upper surface 8a and the end surface 8c of the wall portion 8D is set at h2 (where h1 <h2). The end surface 8c of the wall portion 8D constitutes an attachment surface to be brought into contact with the substrate 2. Herein, the distance h2 is set to be such a height as to protrude downward from a caulking portion when the feeding member 9 is caulked to the lower surface 8b.

Further, the wall portion 8D has a function of a positioning spacer that performs positioning in the axis M direction, i.e., in the optical axis direction with respect to the substrate 2 by setting the distance h2 appropriately.

In this embodiment, as the material for the module lower plate 8, a synthetic resin having an electric insulating property and a light-shielding property is adopted.

Therefore, as illustrated in FIG. 5(a), the wall portion 8D has a function of a light-shielding material that shields the periphery of the image pickup element 30 from light by covering the image pickup element 30 provided on the substrate 2 from a side.

Further, due to the electric insulating property, the module lower plate 8 functions as an insulating member that fixes the feeding member 9 to the lower plate spring 7 in an electrically insulated state. Further, the module lower plate 8 also functions as an insulating member that keeps an electrically insulated state with respect to the substrate 2 which the end surface 8c abuts against.

As illustrated in FIG. 11, the feeding member 9 includes a pair of electrodes 9a, 9b respectively made of a plate-shaped metal plate in this embodiment.

The electrodes 9a, 9b are formed of a bent line shaped metal plate having a wiring portion 9B in a substantially L-shape along the outer shape of the module lower plate 8 and terminal portions 9C protruding to the outer side of the outer shape of the module lower plate 8 from the end of the wiring portion. Each wiring portion 9B is provided with two through-holes 9A for positioning the electrodes 9a, 9b with respect to the module frame 5 by inserting two lower-side fixing pins 14B adjacent to each other along the outer shape of the module lower plate 8 of the lower-side fixing pins 14B of the module frame 5 protruding downward from the lower surface 8b of the module lower plate 8.

In this embodiment, as illustrated in FIG. 3, the terminal portions 9C of the electrodes 9a, 9b are provided in the module frame 5 so as to protrude in parallel outward in the radial direction from the side surface on which the wire holding member 15A is attached.

Therefore, the electrode 9a is provided with a conductive connecting portion 9D that is cut away in a concave shape so as to electrically connect the terminal portions 15a of the wire holding member 15A to the side surface on the wiring portions 9B between the through-holes 9A and the terminal portions 9C.

Further, the electrode 9b is provided with a conductive connecting portion 9D that is cut away in a concave shape so as to electrically connect the terminal portions 15a of the wire holding member 15B to the side surface on the wiring portions 9B between two through-holes 9A.

Further, the electrodes 9a, 9b are formed with the same volume, using the same metal material such as copper, aluminum or stainless steel, whereby the heat capacities of the electrodes 9a, 9b are set to be equal to each other. Further, the shape of the electrodes 9a, 9b is an example, and the electrodes 9a, 9b can be formed with an appropriate size and shape within the range of the lower surface 8b of the module lower plate 8, depending upon a required heat capacity and the magnitude of an electric resistance.

As means for electrically connecting the respective conductive connecting portions 9D to the terminal portions 15a, for example, adhesion through soldering or a conductive adhesive can be adopted.

Thus, in this embodiment, the electrodes 9a, 9b of the feeding member 9 can be attached to the module lower plate 8 easily even if they are formed with the same heat capacity and in various shapes, and hence, for example, the protruding direction and protruding position of the terminal portions 9C can be also varied easily depending upon the shape of the substrate 2 to which the terminal portions 9C are attached and the arrangement of the land portions 3. Further, the electric resistance can be changed easily by changing the material, the shape, and the like of the electrodes 9a, 9b. Therefore, for example, even in the case where the resistance specifications of a controller that controls a current of the SMA wire 10 vary, the variation can be handled only by the change in the electrodes 9a, 9b. Thus, the commonality ratio of components of the driving module provided for various required specifications can be enhanced remarkably.

As illustrated in FIGS. 2, 4, and 12, the cover 11 is a member in which a side wall portion 11D covering the module frame 5 from an outside of the module frame extends downward from an outer edge of an upper surface 11E, an opening 11C in a rectangular shape is formed on a lower side, and a circular opening 11A with the axis M being the center is provided at the center of the upper surface 11E. The size of the opening 11A is designed so that the lens unit 12 can be taken in or out.

Further, as illustrated in FIG. 12, four U-shaped concave portions 11B for avoiding the interference with the caulking portion 16 described later are formed at the positions corresponding to the arrangement positions of the respective upper-side fixing pins 13A of the lens frame 4 in the circumferential direction of the opening 11A on the back surface side of the upper surface 11E.

The depth of the concave portion 11B is set so that the caulking portion 16 and the cover 11 do not come into contact with each other even at a position where the positioning surface 4E1 and the reception surface 5E1 abut against each other. The concave portion 11B may be concave portion protruding upward. However, in this embodiment, the thickness of the concave portion 11B is set to be small, and the concave portion 11B is formed within the range of the thickness of the cover 11, whereby the outer surface of the upper surface 11E is set to be a flat surface.

The method of assembling the driving module 1 with such a configuration is described successively.

In a first step, first, the lens frame 4 is inserted in the housing portion 5A of the module frame 5 from a lower side, whereby each end surface 5a of the module frame 5 and the end surface 4a of the lens frame 4 are aligned to the same height. Then, the upper-side fixing pins 14A of the module frame 5 and the upper-side fixing pins 13A of the lens frame 4 are inserted in the respective through-holes 6A, 6B of the upper plate spring 6.

After that, the tip ends of the upper-side fixing pins 14A, 13A that protrude upward through the through-holes 6A, 6B of the upper plate spring 6 are caulked with heat by a heater chip (not shown), whereby the caulking portions 16, 17 (see FIGS. 3 and 4) are formed.

At this time, the end surface 4a of the lens frame 4 and the end surfaces 5a of the module frame 5 are aligned to the same plane. The flat-plate-shaped upper plate spring 6 can be placed without being deformed, and caulking with heat can be performed. Therefore, it is not necessary to press the upper plate spring 6 to be deformed, which makes it easy to perform caulking. Further, the floating caused by the deformation of the upper plate spring 6 can be prevented.

Further, the height of each heater chip can be set to be the same, and hence, the variation in caulking precision can be reduced even when the caulking portions 16, 17 are formed simultaneously.

Next, in a second step, the lower-side fixing pins 13B of the lens frame 4 are inserted respectively in the through-holes 7A of the lower plate spring 7. At this time, the lower-side fixing pins 14B of the module frame 5 are simultaneously inserted in the through-holes 7B of the lower plate spring 7, the through-holes 8C of the module lower plate 8, and the through-holes 9A of the feeding member 9. After that, the tip ends of the lower-side fixing pins 13B that protrude downward through the through-holes 7A of the lower plate spring 7 are caulked with heat by a heater chip, whereby caulking portions 18 (see FIG. 4) are formed.

At this time, an axial distance between the end surfaces 4a, 4b of the lens frame 4 and an axial distance between the end surfaces 5a, 5b of the module frame 5 are equal, and hence the end surfaces 4b, 5b are aligned to the same plane. The flat-plate-shaped lower plate spring 7 can be stacked and placed on the module lower plate 8 without being deformed, and caulking with heat can be performed. Therefore, the floating caused by the deformation of the lower plate spring 7 can be prevented.

Further, the height of each heater chip can be set to be the same, and hence, the variation in caulking precision can be reduced even when the caulking portions 18 are formed simultaneously.

Next, in a third step, the lower ends of the lower-side fixing pins 14B that protrude downward through the through-holes 7B, 8C, and 9A are caulked with heat by a heater chip, whereby caulking portions 19 (see FIG. 4) are formed.

At the time, the height of each heater chip can be set to be the same, and hence, the variation in caulking precision can be reduced even when the caulking portions 19 are formed simultaneously.

Further, the concave portions 8B are formed in the module lower plate 8, and hence the caulking portions 18 formed in the second step do not come into contact with the module lower plate 8.

By performing the operations in the first to third steps, the upper plate spring 6, the lower plate spring 7, the module lower plate 8, and the feeding member 9 are stacked and fixed to both ends of the lens frame 4 and the module frame 5.

In this embodiment, the upper-side fixing pins 13A and the lower-side fixing pins 13B, and the upper-side fixing pins 14A and the lower-side fixing pins 14B are provided respectively coaxially, and hence, in the caulking in the first to third steps, the positions on a plane of the heater chips for forming the caulking portions 16, 18 and the caulking portions 17, 19 become common, respectively. Therefore, it is not necessary to change the position of a heater chip in each caulking, which enables a caulking operation to be performed efficiently.

By caulking the plate spring member with heat as described above, a period of time required for hardening is shorter compared with the case of fixing by adhesion or the like, and hence, an assembly time can be reduced. Further, there is no fear that components are contaminated due to the generation of gas. Further, economically stable fixing can be performed.

Further, compared with the case of using screws with different thermal expansion ratios and the like, looseness is unlikely to occur. Consequently, the reliability of a fixed portion can be enhanced.

Further, a simple configuration with the number of components reduced is achieved because fixing components such as screws are not used, which enables more reduction in weight and miniaturization. In particular, the lens frame 4 that is a body to be driven is reduced in weight, and hence the driving at high speed with low power consumption can be performed.

Next, in a fourth step, a pair of wire holding members 15A, 15B provided with the SMA wire 10 attached to tip ends thereof are locked respectively with locking grooves 5C at two places of the module frame 5, whereby the wire holding members 15A, 15B are held and fixed to the module frame 5 by means such as fitting or adhesion. At this time, the center of the SMA wire 10 is locked with the tip end key portion 4D1 of the guide protrusion 4D and placed across so as to support the tip end key portion 4D1 from a lower side.

At this time, the terminal portions 15a of the wire holding members 15A, 15B protrude to a lower side of the module lower plate 8 and are respectively locked with the conductive connecting portions 9D of the electrodes 9a, 9b that are the feeding member 9 fixed to the module lower plate 8, or placed in the vicinity thereof.

The terminal portions 15a are electrically connected to the conductive connecting portions 9D using, for example, soldering or a conductive adhesive.

More specifically, in this embodiment, the wiring to the ends of the SMA wire 10 can be performed by a simple operation in which the feeding member 9 is placed so that the lower-side fixing pins 14B are inserted therein and fixed by caulking at the tip ends of the lower-side fixing pins 14B, and the wire holding members 15A, 15B are fitted in the locking grooves 5C from the side of the module frame 5 to be electrically connected. According to such an assembly operation, for example, unlike the case of routing, for example, a lead, a flexible board, and the like to the module frame 5 three-dimensionally, assembly can be performed with the movement in one direction, and hence, the assembly can be performed very easily. Therefore, automatic assembly can also be performed easily.

Next, in a fifth step, the cover 11 is placed on the module frame 5 from above, thereby connecting the side wall portion 11D to the module lower plate 8. For example, an engagement hook or the like is provided at the side wall portion 11D, and the side wall portion 11D is connected to the module lower plate 8 by fitting. Alternatively, the side wall portion 11D and the module lower plate 8 are connected to each other by adhesion or welding.

At this time, the caulking portions 16, 17 are respectively away from the back surface of the upper surface 11E of the cover 11.

The assembly of a main body of the driving module 1 is completed.

Next, in a sixth step, the driving module 1 is attached to the substrate 2 with the terminal portions 9C of the driving module 1 being positioned with respect to the land portions 3 on the substrate 2 (see FIG. 1). Then, the terminal portions 9C are electrically connected to the land portions 3 by means such as soldering or a conductive adhesive. At this time, the caulking portions 19 have a height lower than that of the wall portion 8D of the module lower plate 8, and hence, is away from the substrate 2.

As the attachment of the driving module 1 to the substrate 2, fixing means such as adhesion and fitting can be adopted.

The substrate 2 may be an independent member belonging to the driving module 1, or a member connected to and placed at an electronic apparatus or the like.

Next, in a seventh step, the lens unit 12 is screwed and fixed in the lens frame 4 through the opening 11A of the cover 11.

The reason why the lens unit 12 is attached finally is to prevent the lens of the lens unit 12 from being contaminated or to prevent dust and the like from adhering to the lens during an assembly operation. For example, in the case where the driving module 1 is shipped in a product state with the lens unit 12 attached thereto, the case where the opening 11A of the cover 11 is desired to be smaller than the outer shape of the lens unit 12, for example, the opening 11A is also used as a diaphragm, the seventh step may be performed in the middle of the fifth step or the sixth step.

Next, the operation of the driving module 1 is described.

In a state of the driving module 1 in which power is not supplied to the terminal portions 9C, the forces acting on the lens frame 4, such as the tension from the SAM wire 10 and the biasing force that elastically biases the caulking portions 16, 18 from the upper plate spring 6 and the lower plate spring 7, are balanced, and as illustrated in FIG. 5(a), the lens frame 4 with the lens unit 12 attached thereto is held at a constant position in the axial direction.

When power is supplied from the terminal portions 9C to the feeding member 9, for example, the electrodes 9a, the wire holding member 15A, the SMA wire 10, the wire holding portion 15b, and the electrodes 9b are brought into conduction, and hence, a current flows through the SMA wire 10. When Joule heat is generated in the SMA wire 10 and the temperature of the SMA wire 10 is raised to exceed the transformation start temperature of the SMA wire 10, the SMA wire contracts to the length in accordance with the temperature.

Consequently, the guide protrusion 4D of the lens frame 4 moves upward ((X) direction in the figure). Thus, the upper plate spring 6 and the lower plate spring 7 are respectively deformed, and an elastic recovery force in accordance with the deformed amount biases the lens frame 4. Then, the lens frame 4 stops at a position where the elastic recovery force and the tension of the SMA wire 10 are balanced.

At this time, in this embodiment, the upper plate spring 6 and the lower plate spring 7 constitute parallel springs, and hence, the lens frame 4 is moved along the axis M precisely even without being placed along the guide member in the axial direction. Therefore, it is possible to reduce the number of components, and to achieve miniaturization. Further, a sliding burden with respect to the guide member does not occur, and hence, lower power consumption can be realized.

Further, when the supply of power is stopped, the SMA wire 10 can expand, and the lens frame 4 moves to a balanced position in a lower portion ((Y) direction in the figure).

Thus, the lens frame 4 can be driven in the direction of the axis M by controlling the supply amount of power.

Further, in the case where the SMA 10 contracts excessively to increase the movement amount of the lens frame 4 excessively at a time of some abnormality, for example, at a time of receiving shock from dropping or instability of power control, due to the presence of the positioning portion 4E and the positioning reception portion 5E in this embodiment, the position of the lens frame 4 is regulated to a predetermined limit value. Therefore, the lens frame 4 can be prevented from bumping against the cover 11, and the upper plate spring 6 and the lower plate spring 7 can be prevented from being deformed beyond a deformation limit. Thus, reliability can be enhanced.

According to the driving module 1 in this embodiment, the feeding member 9, which is stacked and placed on the module lower plate 8 and has a pair of electrodes 9a, 9b having the same heat capacity, is fixed by caulking, and hence, assembly becomes easy and the driving operation can be stable.

### [Embodiment 2]

Next, an electronic apparatus according to Embodiment 2 of the present invention is described.

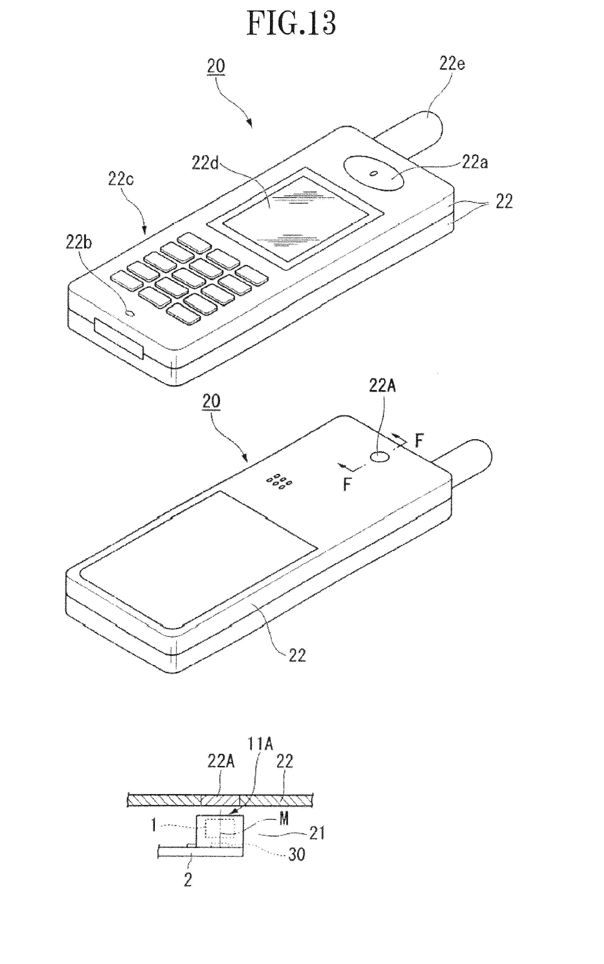

FIGS. 13(a) and 13(b) are external perspective views of a front surface and a back surface of an electronic apparatus according to Embodiment 2 of the present invention. FIG. 13(c) is a cross-sectional view taken along the line F-F of FIG. 13(b).

A mobile phone 20 with a camera in this embodiment illustrated in FIGS. 13(a) and 13(b) is an example of an electronic apparatus having the driving module 1 according to Embodiment 1.

The mobile phone 20 with a camera includes well-known apparatus configurations of a mobile phone such as a receiving portion 22a, a sending portion 22b, an operation portion 22c, a liquid crystal display portion 22d, an antenna portion 22e, and a control circuit portion (not shown) inside and outside of covers 22.

Then, as illustrated in FIG. 13(b), a window 22A transmitting ambient light is provided in the cover 22 on a back surface of the side on which the liquid crystal display portion 22d is provided. As illustrated in FIG. 13(c), the driving module 1 of Embodiment 1 is set so that the opening 11A of the driving module 1 faces the window 22A of the cover 22, and the axis M is placed along the normal direction of the window 22A.

Then, the driving module 1 is mechanically and electrically connected to the substrate 2.

The substrate 2 is connected to the control circuit portion (not shown) so as to supply power to the driving module 1.

According to such a configuration, light transmitted through the window 22A is collected at the lens unit 12 (not shown) of the driving module 1 and can form an image on the image pickup element 30. Then, power is supplied appropriately from the control circuit portion to the driving module 1, whereby a focus position is adjusted by driving the lens unit 12 in the direction of the axis M to perform photographing.

The mobile phone 20 with a camera can be assembled easily and the driving operation thereof can be stabilized due to the presence of the driving module 1 of Embodiment 1. Therefore, the production cost can be reduced. Further, the focusing precision of focus position adjustment can be enhanced.

In the above description, the case where a body to be driven is sandwiched between a pair of plate spring members is exemplified. However, the body to be driven may be held by one plate spring member as long as the driving precision is within an allowable range. In this case, the first fixing pin portion and the second fixing pin portion may be respectively provided only at one end of the body to be driven and the support.

Further, in the above description, though the tip ends of the first fixing pin portions and the second fixing pin portions are caulked using heat of heater chips, caulking means is not limited thereto. For example, the tip ends may be caulked, for example, using the vibration of an ultrasonic vibrator.

Further, in the above description, the case where the first fixing pin portions and the second fixing pin portions are respectively molded integrally with the body to be driven and the support is exemplified. However, at least one of the first fixing pin portions and the second fixing pin portions may be separate members and connected to a body to be driven or support made of another material. More specifically, the materials for the body to be driven and the support are not limited to a thermoplastic resin capable of being caulked.

Further, in the above description, the module frame 5 is a member generally formed into a substantially rectangular shape. However, the module frame 5 may have a polygonal shape without being limited to a substantially rectangular shape. In this case, a rectangular corner can be replaced by a polygonal corner.

Further, in the above description, the case where the feeding member includes the electrodes 9a, 9b is exemplified. However, as the feeding member, one printed board or the like with two-system wiring formed therein may be adopted.

Further, in the above description, the case where the driving module is used in a focus position adjusting mechanism of a lens unit is exemplified. However, the use of the driving module is not limited thereto. For example, the driving module may be used in another portion as an appropriate actuator that moves a body to be driven to a target position. For example, the driving module can be used as an appropriate actuator by screwing a rod member or the like in place of the lens unit 12 or changing the lens frame 4 to another shape. More specifically, the body to be driven may include a columnar member without being limited to a tubular member.

Further, in the above description, the electronic apparatus using the driving module is described in an example of a mobile phone with a camera. However, the kind of the electronic apparatus is not limited thereto. For example, the driving module may be used in an optical apparatus such as a digital camera or a camera built in a personal computer, or used as an actuator that moves a body to be driven to a target position in an electronic apparatus such as an information reading storage device and a printer.

Further, the components in each embodiment described above may be combined appropriately within the technical concept of the present invention, if possible technically.

## Claims

1. A driving module, comprising:
a body to be driven in which at least one of both ends has a first fixing pin portion made of a thermoplastic resin;
a support which is formed into a tubular shape and contains the body to be driven movably in a predetermined direction, and in which at least one of both tubular ends has a second fixing pin portion made of a thermoplastic resin extending in the predetermined direction;
a plate spring member which is stacked and placed on the tubular end of the support and the end of the body to be driven while being inserted in the first fixing pin portion of the body to be driven and the second fixing pin portion of the support from the same direction, and which provides a biasing force in the predetermined direction to the body to be driven;
a shape memory alloy wire which is stretched over a tubular outer circumferential portion of the support, and locks the body to be driven at a middle position in a length direction to drive the body to be driven against the biasing force of the plate spring member;
a plate member formed of an electric insulator stacked and placed on one tubular end side of the support while the second fixing pin portion is inserted therein;
a pair of wire holding members with heat capacities equal to each other, which are placed at a side portion of the support and a side portion of the plate member while grasping ends of the shape memory alloy wire to fix a position thereof, and in which terminal portions for receiving supply of a current extend in a range exceeding a thickness of the side portion of the plate member; and
a feeding member which has a pair of electrodes with heat capacities equal to each other, respectively connected electrically to the terminal portions of the respective wire holding members, and which is stacked and placed through the second fixing pin portion inserted in the plate member,
wherein the plate spring member is fixed to the body to be driven in the first fixing pin portion by caulking a tip end of the first fixing pin portion, and is fixed to the support in the second fixing pin portion by caulking a tip end of the second fixing pin portion, and
wherein the feeding member is fixed by caulking the tip end of the second fixing pint portion.

2. A driving module according to claim 1, wherein the feeding member comprises electrodes formed of a pair of metal plates, which are made of the same material and have the same volume.

3. An electronic apparatus comprising the driving module according to claim 1 or 2.
